# FASCICULE DE BREVET EUROPEEN

(11) **EP 4 392 729 B1**
(45) Date de publication et mention de la délivrance du brevet: **08.10.2025**
(21) Numéro de dépôt: 22778048.3
(22) Date de dépôt: 24.08.2022
(51) Int. Cl.: F28D 20/02, F28D 7/10, F28F 1/16, F28D 20/00, F28D 21/00

(54) **UNITE DE CHAUFFAGE ET/OU DE REFROIDISSEMENT A MATERIAU A CHANGEMENT DE PHASE**
HEIZ- UND/ODER KÜHLEINRICHTUNG MIT EINEM PHASENWECHSELMATERIAL
HEATING AND/OR COOLING UNIT WITH A PHASE CHANGE MATERIAL

(30) Priorité: 24.08.2021 FR 2108875
(43) Date de publication de la demande: 03.07.2024
(73) Titulaire: Sun-Ice Energy PTE. LTD., Singapore 627699 (SG)
(72) Inventeur: MOUCHET, Jacques, 78340 Les Clayes-sous-Bois (FR)
(74) Mandataire: AtlantIP International
(86) Numéro de dépôt international: PCT/IB2022/057915
(87) Numéro de publication internationale: WO 2023/026206

(56) Documents cités:
- EP-A1- 3 106 763
- EP-B1- 2 614 330
- EP-B1- 3 106 763
- WO-A1-2017/016646
- WO-A1-2017/016647
- WO-A1-2020/056065
- DE-A1- 102010 037 474
- GB-A- 2 506 354
- KR-A- 20190 018 984
- KR-A- 20200 081 176
- KR-B1- 100 540 470
- KR-B1- 101 962 931
- US-A- 5 220 954
- US-A1- 2010 276 121
- US-A1- 2014 223 942
- US-A1- 2020 096 262
- US-A1- 2022 260 324

## Description

La présente invention se rapporte à une unité de chauffage et/ou de refroidissement comportant un matériau à changement de phase, notamment pour permettre le stockage d'énergie.

L'invention est par exemple une unité complémentaire destinée à s'intégrer à une installation de chauffage et/ou de climatisation existante, telle qu'une pompe à chaleur réversible, etc.

En effet, les installations de chauffage et/ou de climatisation sont des installations extrêmement consommatrices en énergie et peu écologiques, celles-ci représentant les principales sources de consommation d'énergie des villes. La présente invention propose ainsi une solution pour optimiser la consommation d'énergie et être plus respectueux de l'environnement en permettant le stockage de calories ou de frigories (donc de chaleur ou de froid) lorsque celles-ci sont peu onéreuses ou écologiques, et de les utiliser lorsque cela est indispensable, notamment lors des périodes de fortes demandes et/ou lors de pénuries d'approvisionnement (pics de chaleur, vagues de froid, etc.). DE 10 2010 037474 A1 divulgue une unité de chauffage selon le préambule de la revendication 1.

Une unité de chauffage et/ou de refroidissement selon l'invention est ainsi destinée à stocker des calories ou des frigories et délivrer un fluide, tel que de l'air, à la température souhaitée pour réguler la température d'un lieu, notamment un logement, un bureau, une salle de stockage, une salle de réunion, une chambre froide, etc.

La présente invention est ainsi une unité de chauffage et/ou de refroidissement d'au moins un fluide de régulation de thermique selon la revendication 1, ladite unité comportant au moins une boucle dans laquelle circule un fluide caloporteur, ladite boucle comprenant :
- un matériau à changement de phase configuré pour stocker de l'énergie (notamment de l'énergie thermique sous forme physico-chimique) ;
- au moins un échangeur de chaleur configuré pour, d'une part, être traversé par ledit fluide caloporteur et, d'autre part, refroidir ou chauffer ledit matériau de stockage ;
ledit échangeur de chaleur comprenant ainsi une première structure dans laquelle est aménagé un conduit pour le fluide caloporteur et une deuxième structure entourant la première structure, lesdites première et deuxième structures étant configurées pour qu'il y ait un espace entre lesdites structures définissant un logement dans lequel est disposé ledit matériau à changement de phase, l'unité étant configurée pour refroidir ou chauffer ledit fluide de régulation thermique au moyen de la deuxième structure dudit échangeur (ainsi qu'au moyen du matériau à changement de phase, notamment par l'extraction ou le transfert de chaleur dudit matériau).

Le fluide de régulation thermique est de l'air, cet air réchauffé ou refroidi permettant la régulation thermique d'un lieu déterminé.

On notera qu'on entend par matériau à changement de phase (ou PCM en langue anglaise pour « Phase-Change Material »), tout matériau capable de changer d'état physique, notamment entre un état liquide et un état solide, dans une plage de température restreinte.

Selon une caractéristique possible, ladite boucle comprend une vanne d'arrêt, ladite vanne étant configurée pour arrêter la circulation du fluide caloporteur dans la boucle de ladite unité

Cette vanne d'arrêt est particulièrement utile lors de la mise à l'arrêt de l'unité et/ou quand le stockage maximal d'énergie est atteint (c'est-à-dire quand le matériau à changement de phase ne peut plus stocker d'énergie et qu'il y a une évolution positive ou négative de se température au-delà de la plage de latence dudit matériau).

Selon l'invention, ladite unité comprend au moins un moyen de circulation dudit fluide de régulation thermique, ledit moyen de circulant étant configuré pour faire circuler (de préférence directement) ledit fluide le long dudit échangeur de chaleur (que cela soit au centre et/ou sur les bords dudit échangeur).

Cette géométrie d'échangeur de chaleur peut par exemple être réalisée par extrusion, notamment par extrusion de la partie centrale dudit échangeur.

Selon une autre caractéristique possible, ladite unité comprend au moins une pompe pour faire circuler le fluide caloporteur dans ladite boucle.

Selon une autre caractéristique possible, la première structure et/ou la deuxième structure dudit échangeur de chaleur comprennent des ailettes.

On notera que les matériaux à changement de phase présentent généralement un coefficient de conduction thermique faible, des ailettes permettent notamment d'améliorer la conduction thermique entre le matériau à changement de phase et les autres éléments de l'échangeur, ainsi qu'avec le fluide caloporteur et/ou le fluide de régulation thermique, tel qu'un flux d'air.

Selon une autre caractéristique possible, les ailettes de la première structure s'étendent en éloignement en direction de la deuxième structure dudit échangeur.

En d'autres termes, les ailettes de la première structure s'étendent depuis la première structure vers la deuxième structure dudit échangeur.

Selon une autre caractéristique possible, les ailettes de la deuxième structure s'étendent en éloignement de la deuxième structure et/ou s'étendent en direction de la première structure.

Selon une autre caractéristique possible, l'échangeur de chaleur comprend deux profilés extrudés en aluminium disposés concentriquement l'un par rapport à l'autre. Le premier profilé extrudé, respectivement la première structure, comporte en son centre le conduit du fluide caloporteur, tandis que le deuxième profilé extrudé, respectivement la deuxième structure, comprend à sa surface externe des ailettes pour transférer ou céder des calories au fluide de régulation thermique, tel que de l'air de ventilation, tandis qu'entre les deux profilés, le matériau à changement de phase est par exemple maintenu à la température latente de fusion dudit matériau (par exemple une température latente de fusion comprise entre 22 et 24° Celsius).

Selon une autre caractéristique possible, ledit échangeur de chaleur est disposé dans un fourreau, l'espace entre la surface interne du fourreau et la deuxième structure dudit échangeur définissant un conduit pour le fluide de régulation thermique.

Selon une autre caractéristique possible, ladite unité comprend un ou plusieurs capteurs du type suivants : capteur de température du fluide caloporteur en entrée et/ou en sortie dudit échangeur, capteur de température du matériau à changement de phase, capteur de température du flux d'air en entrée et/ou en sortie dudit échangeur de chaleur (ou de l'unité), capteur de température de la pièce conditionnée thermiquement par ladite unité, un capteur d'humidité relative, un capteur de dioxyde de carbone.

On notera que le capteur d'humidité relative et/ou le capteur de dioxyde de carbone sont facultatifs et servent entre autres à optimiser le fonctionnement de l'unité dans les pays tropicaux et à minimiser l'utilisation d'air extérieur.

Le capteur de dioxyde de carbone est également un dispositif sécuritaire évitant que le taux de dioxyde de carbone du lieu conditionné thermiquement par ladite unité n'atteigne des valeurs préjudiciables, voire dangereuses, pour la santé humaine.

Selon une autre caractéristique possible, ladite unité est configurée pour s'interfacer avec ou s'intégrer dans une installation de climatisation et/ou de chauffage, notamment une installation fonctionnant au moyen d'un fluide caloporteur et/ou frigorigène chaud et/ou réfrigéré.

Selon une autre caractéristique possible, ladite unité comprend une entité électronique de gestion configurée pour contrôler, entre autres, la circulation du fluide caloporteur dans ladite boucle et/ou la circulation du fluide de régulation thermique.

L'entité permet notamment de stocker de l'énergie dans le matériau à changement de phase en heures creuses et de limiter sa consommation lorsque l'énergie est plus onéreuse.

Selon une autre caractéristique possible, ladite unité comprend une interface homme-machine. La présente invention se rapporte également à une installation de chauffage et/ou de climatisation comportant une unité de chauffage et/ou de refroidissement telle que définie précédemment.

L'invention sera mieux comprise, et d'autres buts, détails, caractéristiques et avantages de celles-ci apparaîtront plus clairement au cours de la description suivante de modes de réalisation particuliers de l'invention, donnée uniquement à titre illustratif et non limitatif, en référence aux dessins annexés, sur lesquels :
- la figure 1, référencée [Fig. 1], est une représentation très schématique d'une unité de chauffage et/ou de climatisation selon l'invention ;
- la figure 2, référencée [Fig. 2], est une vue schématique agrandie et en perspective d'une partie de l'unité de la figure 1 ;
- la figure 3, référencée [Fig. 3], est une vue schématique et agrandie du boitier de contrôle de l'unité de la figure 1 et 2 ;
- la figure 4, référencée [Fig. 4], est une vue en coupe transversale d'un échangeur de chaleur de l'unité de la figure 1 ;
- la figure 5, référencée [Fig. 5], est une vue en perspective d'un échangeur de chaleur de l'unité de la figure 1 ;
- la figure 6, référencée [Fig. 6], est une représentation schématique d'une partie de l'unité selon une variante de réalisation de l'invention.

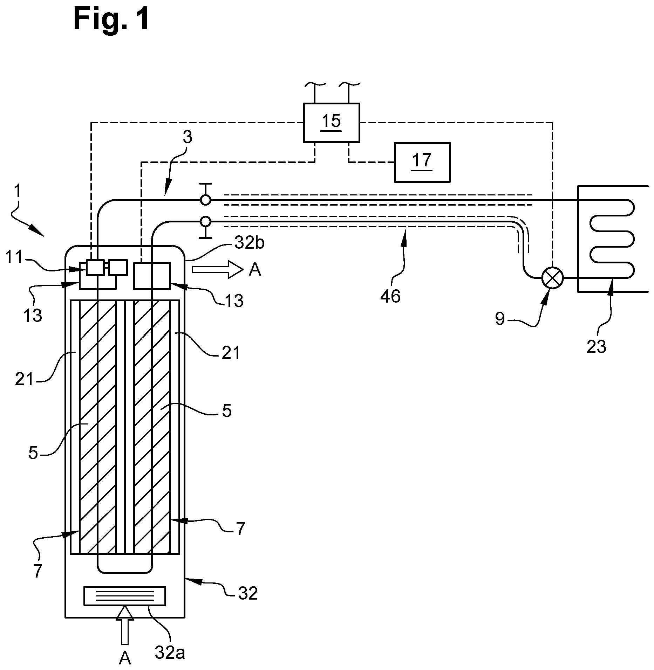

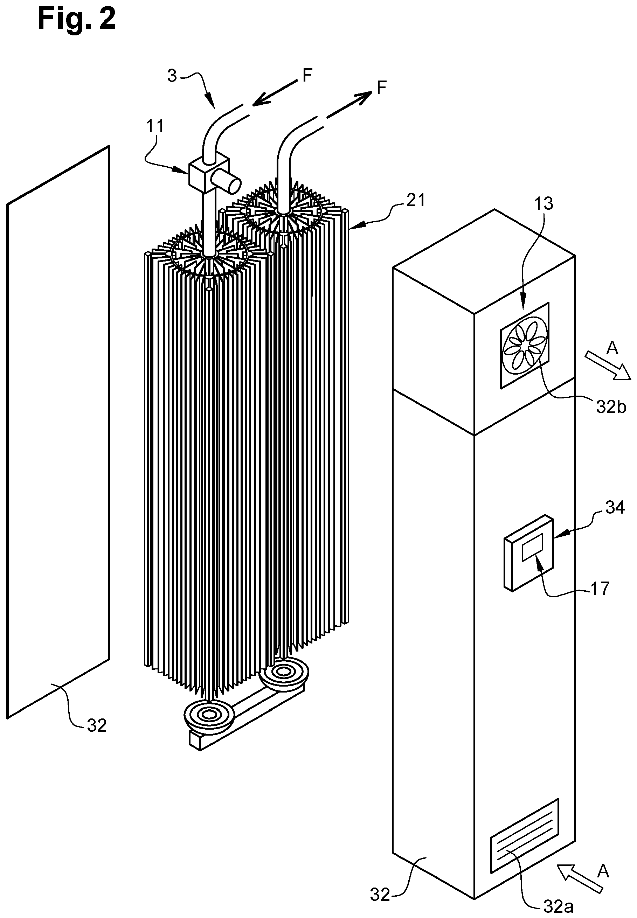

La figure 1 est ainsi une représentation très schématique d'une unité 1 de chauffage et/ou de climatisation selon l'invention, tandis que la figure 2 est une vue agrandie en perspective d'une partie de l'unité 1 de la figure 1.

L'unité 1 de chauffage et/ou de refroidissement est configurée pour chauffer et/ou refroidir au moins un fluide de régulation thermique A, tel que de l'air, destiné à réguler la température d'un lieu (logement, bureau, etc.).

Ladite unité 1 comporte ainsi au moins une boucle 3 dans laquelle circule un fluide caloporteur F. ladite boucle 3 comprenant :
- un matériau à changement de phase 5, c'est-à-dire un matériau apte à changer d'état physique dans une plage de température restreinte et de stocker et déstocker des calories par ce moyen ;
- au moins un échangeur de chaleur 7 configuré pour, d'une part, être traversé par ledit fluide caloporteur F et, d'autre part, refroidir ou réchauffer ledit matériau à changement de phase.

Ledit matériau à changement de phase 5 présente une température de fusion comprise entre -10°C et 25°C (ceci pour le stockage d'énergie), et de préférence comprise entre -5°C et 20°C, et encore plus préférentiellement comprise entre 22°C et 24°C, notamment lorsqu'on destine ledit fluide à la régulation thermique d'une pièce compatible avec les normes de confort humaines.

Ladite boucle 3 comprend ainsi :
- Au moins une pompe 9 pour faire circuler le fluide caloporteur F dans ladite boucle 3.
- Une vanne d'arrêt 11, ladite vanne 11 étant configuré pour arrêter la circulation du fluide caloporteur F dans la boucle 3 de ladite unité 1. L'arrêt de la circulation du fluide caloporteur F limite, voire stoppe, le stockage ou le déstockage des calories entre le fluide caloporteur F et le matériau à changement de phase 5.
- Au moins un moyen de circulation 13 dudit fluide de régulation thermique A, ledit moyen de circulation 13 étant configuré pour faire circuler le fluide de régulation thermique A le long dudit échangeur 7 de chaleur.

On notera que le fluide caloporteur F est avantageusement de l'eau, de l'eau glycolée (c'est-à-dire de l'eau mélangée avec du glycol), du glycol, etc.

Le moyen de circulation 13 est par exemple un groupe motoventilateur ou un ventilateur (tel qu'un ventilateur centrifuge) permettant d'aspirer (ou de « pousser ») de l'air A à travers l'unité 1 et de faire circuler l'air le long de l'échangeur 7 pour que celui-ci se refroidisse ou se réchauffe par son intermédiaire (et par extension la pièce dans laquelle l'air débouche). Selon des variantes de réalisation non représentées, l'échangeur de chaleur peut présenter différentes géométries et/ou comprendre différents éléments de sorte que l'air puisse circuler au centre et/ou sur les bords dudit échangeur de chaleur.

Ledit moyen de circulation 13 est avantageusement contrôlé en vitesse par exemple pour réduire le bruit de ventilation la nuit et/ou réguler la température du fluide de régulation thermique (au moyen du contrôle du débit de fluide débouchant dans la pièce à réguler thermiquement).

Comme cela est plus particulièrement illustré aux figures 1 et 2, l'unité 1 comprend un boitier 32 dans lequel sont par exemple logés l'échangeur de chaleur 7, le moyen de circulation 13, une partie de la boucle 3, la vanne d'arrêt 11, etc. Ledit boitier 32 comprend également une entrée d'air 32a et une sortie d'air 32b pour permettre la circulation d'air au moyen dudit moyen de circulation 13. On notera par ailleurs que l'entrée d'air 32a peut être configurée pour aspirer de l'air provenant de l'extérieur (généralement sec) et/ou de l'air déjà conditionné thermiquement par l'unité (également désigné sous le terme d'air recyclé).

Avantageusement la partie de la boucle 3 qui n'est pas disposée dans le boitier 32 est isolée thermiquement du milieu extérieur, par exemple au moyen d'un isolant thermique 46. Cette isolation thermique permet de limiter les déperditions thermiques avant que le fluide caloporteur n'arrive au niveau du matériau à changement de phase (cela est d'autant plus pertinent que la boucle à l'extérieur du boitier est importante).

On notera que l'unité 1 est configurée pour être reliée à une installation de chauffage et/ou de climatisation, une pompe à chaleur, etc. ou tout autre dispositif permettant de générer du froid ou de la chaleur (généralement des installations opérant un cycle thermodynamique).

Dans le mode de réalisation présenté à la figure 1, la boucle 3 de l'unité 1 comprend un échangeur de chaleur complémentaire 23 destiné à établir une telle liaison avec une source chaude et/ou froide et donc de coupler facilement l'unité 1 à une installation de chauffage et/ou de climatisation existante.

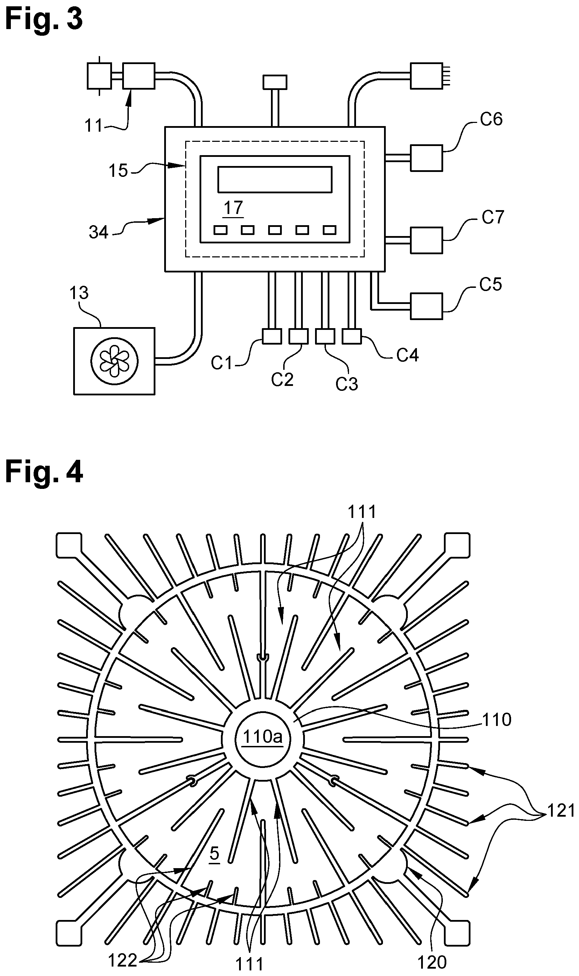

Ladite unité 1 comprend également :
- un ou plusieurs capteurs (plus particulièrement visible à la figure 3) du type suivants : capteur de température du fluide caloporteur en entrée et/ou en sortie dudit échangeur C1 et/ou C2, un capteur de température du matériau à changement de phase C3, un capteur de température du flux d'air en entrée et/ou en sortie dudit échangeur de chaleur C4, capteur de température de la pièce conditionné thermiquement C5par ladite unité, un capteur d'humidité relative C6, un capteur de dioxyde de carbone C7.
- Une entité électronique de gestion 15 configurée pour contrôler, entre autres, la circulation du fluide caloporteur F dans ladite boucle 3 et/ou la circulation (débit, vitesse, etc.) du fluide de régulation thermique A dans l'unité 1.
- Une interface homme-machine 17, ladite interface homme-machine (ou interface utilisateur) étant l'ensemble des éléments permettant à l'utilisateur d'interagir avec l'unité, et plus particulièrement de contrôler l'unité et/ou d'échanger des informations avec celui-ci. L'interface homme-machine comprend par exemple un ou plusieurs des éléments suivants : bouton(s), clavier, écran, écran tactile, molette(s), voyants lumineux, etc.

De plus, l'entité électronique de gestion 15 et l'interface homme-machine 17 sont avantageusement disposées dans un boitier de contrôle 34. Le boitier 34 et les différents capteurs C1 à C7 sont plus particulièrement illustrés à la figure 3.

Par ailleurs, l'entité 15 comporte avantageusement :
- un moyen de connexion internet, notamment pour la récupération des données relatives aux prévisions météorologiques et pouvoir ainsi anticiper les variations de température et stocker ou déstocker des calories dans le matériau à changement de phase en conséquence ;
- un moyen de connexion à une ou plusieurs autres unités selon l'invention pour permettre à celles-ci de fonctionner de concert, notamment en faisant que l'une des unités contrôle l'ensemble des autres unités.

Comme cela est illustré à la figure 2, ledit échangeur de chaleur 7 est disposé dans un fourreau 21. Ledit fourreau 21 est préférentiellement réalisé dans un matériau thermiquement isolant.

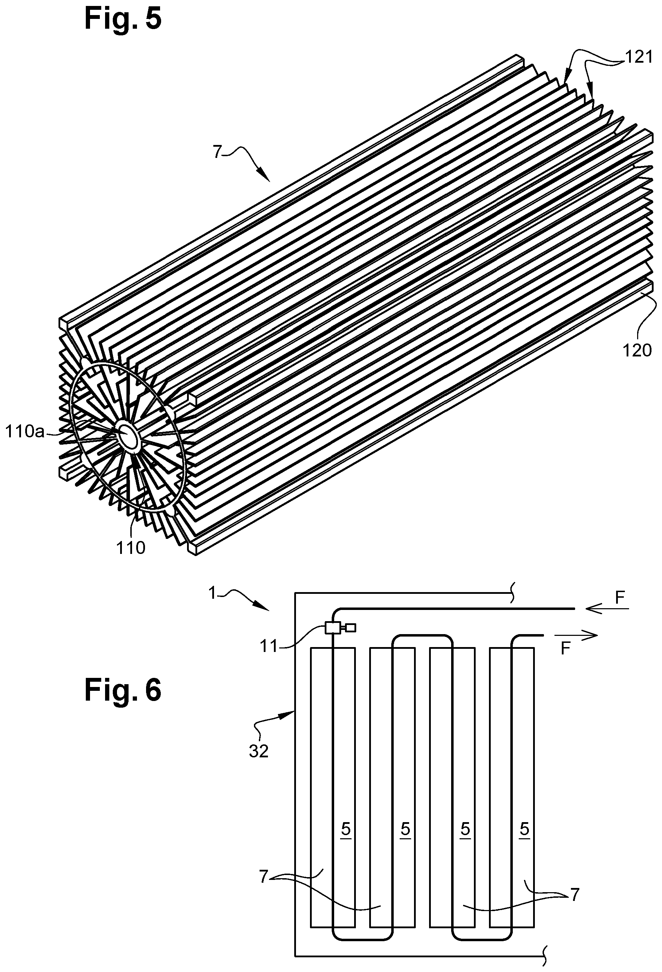

Comme cela est plus particulièrement illustré aux figures 4 et 5, qui sont respectivement une vue en coupe transversale et une vue en perspective de l'échangeur 7, cet échangeur de chaleur 7 comprend :
- une première structure 110 dans laquelle est aménagé un conduit 110a pour le fluide caloporteur F, par exemple en son centre ;
- une deuxième structure 120 entourant la première structure 110 (et donc le conduit 110a), par exemple concentriquement par rapport à la première structure 110.

Lesdites première 110 et deuxième 120 structures sont configurées pour qu'il y ait un espace entre lesdites structures 110 et 120 définissant un logement dans lequel est disposé (ou stocké) le matériau à changement 5 de phase.

On notera par ailleurs que l'échangeur de chaleur 7 et ses première et deuxième structures 110 et 120 sont avantageusement réalisés en un matériau métallique, thermiquement conducteur, tel que de l'aluminium.

L'échangeur de chaleur 7 est avantageusement réalisé par extrusion. L'échangeur 7 est de forme allongée, ceci afin que le conduit de fluide caloporteur soit le plus long possible, afin que celui-ci cède ou récupère des calories du matériau à changement de phase.

Ainsi, dans un mode de réalisation possible, l'échangeur de chaleur 7 comprend deux profilés extrudés 110 et 120 en aluminium disposés concentriquement l'un par rapport à l'autre. Chacun des profilés présente par exemple des sections circulaires, carrées, rectangulaires, etc.

Le premier profilé extrudé, respectivement la première structure 110, comporte, disposé en son centre, le conduit 110a du fluide caloporteur.

Le fluide de régulation thermique A est donc refroidi et/ou réchauffé au moyen de la deuxième structure 120 dudit échangeur 7, notamment par l'intermédiaire de sa surface externe.

De plus, les structures 110 et 120 comprennent avantageusement des ailettes 111, 121 et 122, lesdites ailettes permettant d'augmenter les surfaces de contact et donc de maximiser les échanges thermiques.

Plus particulièrement, les ailettes 111 de la première structure 110 s'étendent en éloignement en direction de la deuxième structure 120 dudit échangeur 7, les ailettes 111 se déploient ainsi dans le volume ou espace où est stocké le matériau à changement de phase 5, augmentant ainsi sur la surface de contact entre ledit matériau 5 et la première structure 110 et favorisant les échanges thermiques entre le fluide caloporteur F circulant dans le conduit 110a et ledit matériau 5.

Les ailettes 121 et 122 de la deuxième structure 120 peuvent, quant à elles, s'étendre en éloignement de la deuxième structure 120 (à partir de sa surface externe), dites ailettes externes 121, et/ou s'étendre en direction de la première structure 110 (à partir de la surface interne de la structure 120), dites ailettes internes 122. Les ailettes externes 121 augmentent la surface de contact entre le flux de régulation thermique A et la deuxième structure 120, facilitant les échanges thermiques, tandis que les ailettes internes 122 augmentent la surface de contact avec le matériau à changement de phase 5, facilitant un transfert thermique entre le matériau 5 et le fluide de régulation thermique A.

On notera que certaines ailettes 111 de la première structure 110 et les ailettes internes 122 sont configurées pour coopérer les unes avec les autres pour garantir un espacement constant entre lesdites structures 110 et 120, ainsi qu'une bonne tenue mécanique de l'ensemble.

On notera également que le fourreau 21 vient plus particulièrement entourer ledit au moins un échangeur 7 de manière à ce qu'il y ait un espace entre la surface interne du fourreau 21 et la deuxième structure 120 dudit échangeur 7, l'espace ainsi formé définissant un conduit pour le fluide de régulation thermique A et permettant de canaliser celui-ci et de maximiser les échanges thermiques entre le fluide A et l'échangeur 7.

De manière avantageuse, le périmètre extérieur défini par les ailettes externes 121 présente une forme géométrique, telle qu'une forme carrée ou plus généralement rectangulaire, facilitant ainsi la fabrication d'un fourreau 21 venant s'enfiler sur l'échangeur 7.

Dans une variation de réalisation représentée à la figure 6, l'unité 1 comprend plusieurs échangeurs de chaleur 7 disposés en série et/ou en parallèle, chacun des échangeurs 7 pouvant comprendre des matériaux à changement de phase 5 présentant des températures latentes de fusion différentes. Cette configuration permet notamment une plus grande polyvalence au regard des conditions de températures extérieures et des températures auxquelles l'unité selon l'invention doit conditionner thermiquement le fluide de régulation thermique.

La présente invention se rapporte également à une installation de chauffage et/ou de climatisation comportant une unité de chauffage et/ou de refroidissement telle que définie ci-dessus.

## Revendications

1. Unité de chauffage et/ou de refroidissement (1) d'au moins un fluide de régulation de thermique (A), ladite unité (1) comportant au moins une boucle (3) dans laquelle circule un fluide caloporteur (F), ladite boucle (3) comprenant :
- un matériau à changement de phase (5) configuré pour stocker de l'énergie ;
- au moins un échangeur de chaleur (7) configuré pour, d'une part, être traversé par ledit fluide caloporteur (F) et, d'autre part, refroidir ou chauffer ledit matériau de stockage (5) ;
**caractérisé en ce que** ledit échangeur de chaleur (7) présente une forme allongée, et comprend une première structure (110) dans laquelle est aménagé un conduit (110a) pour le fluide caloporteur (F) et une deuxième structure (120) entourant la première structure (110), lesdites première (110) et deuxième (120) structures étant configurées pour qu'il y ait un espace entre lesdites structures (110, 120) définissant un logement dans lequel est disposé ledit matériau à changement de phase (5), l'unité (1) étant configurée pour refroidir ou chauffer ledit fluide de régulation thermique (A) au moyen de la deuxième structure (120) dudit échangeur, ledit fluide de régulation thermique (A) étant de l'air, ledit échangeur de chaleur (7) étant disposé dans un fourreau (21), l'espace entre la surface interne du fourreau (21) et la deuxième structure (120) dudit échangeur (7) définissant un conduit (110a) pour le fluide de régulation thermique (A), ladite unité comprenant au moins un moyen de circulation (13) dudit fluide de régulation thermique (A), ledit moyen de circulation (13) étant configuré pour faire circuler ledit fluide le long dudit échangeur de chaleur (7).

2. Unité (1) selon la revendication précédente, **caractérisée en ce qu'**elle comprend au moins une pompe pour faire circuler le fluide caloporteur (F) dans ladite boucle (3).

3. Unité (1) selon l'une quelconque des revendications précédentes, **caractérisée en ce que** la première structure (110) et/ou la deuxième structure (120) comprennent des ailettes (111, 121, 122).

4. Unité (1) selon la revendication précédente, **caractérisée en ce que** les ailettes (111) de la première structure (110) s'étendent en éloignement en direction de la deuxième structure (120) dudit échangeur (7), et/ou les ailettes (121, 122) de la deuxième structure (120) s'étendent en éloignement de la deuxième structure (120) et/ou s'étendent en direction de la première structure (110).

5. Unité (1) selon l'une quelconque des revendications précédentes, **caractérisée en ce qu'**elle comprend un ou plusieurs capteurs du type suivants : capteur de température du fluide caloporteur (C1, C2), capteur de température du matériau à changement de phase (C3), capteur de température du flux d'air (C4) en entrée et/ou en sortie dudit échangeur de chaleur (7), capteur de température de la pièce conditionné thermiquement (C5) par ladite unité (1), un capteur d'humidité relative (C6), un capteur de dioxyde de carbone (c7).

6. Unité (1) selon l'une quelconque des revendications précédences, **caractérisée en ce que** ladite unité (1) est configurée pour s'interfacer avec ou s'intégrer dans une installation de climatisation et/ou de chauffage.

7. Unité (1) selon l'une quelconque des revendications précédentes, **caractérisée en ce qu'**elle comprend une entité électronique de gestion (15) configurée pour contrôler, entre autres, la circulation du fluide caloporteur (F) dans ladite boucle (3) et/ou la circulation du fluide de régulation thermique (A).

8. Installation de chauffage et/ou de climatisation comportant une unité de chauffage et/ou de refroidissement (1) selon l'une quelconque des revendications précédentes.

## Patentansprüche

1. Heiz- und/oder Kühleinheit (1) mindestens eines Wärmeregulierungsfluids (A), wobei die Einheit (1) mindestens einen Kreislauf (3) umfasst, in dem ein Wärmeträgerfluid (F) zirkuliert, wobei der Kreislauf (3) Folgendes umfasst:
- ein Phasenwechselmaterial (5), das dazu konfiguriert ist, Energie zu speichern;
- mindestens einen Wärmetauscher (7), der dazu konfiguriert ist, einerseits von dem Wärmeträgerfluid (F) durchlaufen zu werden, und andererseits das Speichermaterial (5) zu kühlen oder zu erwärmen;
**dadurch gekennzeichnet, dass** der Wärmetauscher (7) eine längliche Form aufweist und eine erste Struktur (110) umfasst, in der eine Leitung (110a) für das Wärmeträgerfluid (F) eingerichtet ist, und eine zweite Struktur (120), die die erste Struktur (110) umgibt, wobei die erste (110) und zweite Struktur (120) dazu konfiguriert sind, dass ein Raum zwischen den Strukturen (110, 120) besteht, der eine Aufnahme definiert, in der das Phasenwechselmaterial (5) angeordnet ist, wobei die Einheit (1) dazu konfiguriert ist, das Wärmeregulierungsfluid (A) mittels der zweiten Struktur (120) des Wärmetauschers zu kühlen oder zu erwärmen, wobei das Wärmeregelierungsfluid (A) Luft ist, wobei der Wärmetauscher (7) in einer Hülse (21) angeordnet ist, wobei der Raum zwischen der Innenfläche der Hülse (21) und der zweiten Struktur (120) des Wärmetauschers (7) eine Leitung (110a) für das Wärmeregelierungsfluid (A) definiert, wobei die Einheit mindestens ein Zirkulationsmittel (13) des Wärmeregulierungsfluids (A) umfasst, wobei das Zirkulationsmittel (13) dazu konfiguriert ist, das Fluid entlang des Wärmetauschers (7) zirkulieren zu lassen.

2. Einheit (1) nach dem vorstehenden Anspruch, **dadurch gekennzeichnet, dass** sie mindestens eine Pumpe umfasst, um das Wärmeträgerfluid (F) in dem Kreislauf (3) zirkulieren zu lassen.

3. Einheit (1) nach einem der vorstehenden Ansprüche, **dadurch gekennzeichnet, dass** die erste Struktur (110) und/oder die zweite Struktur (120) Rippen (111, 121, 122) umfasst.

4. Einheit (1) nach dem vorstehenden Anspruch, **dadurch gekennzeichnet, dass** sich die Rippen (111) der ersten Struktur (110) erstrecken, indem sie sich in Richtung der zweiten Struktur (120) des Wärmetauschers (7) entfernen, und/oder sich die Rippen (121, 122) der zweiten Struktur (120) erstrecken, indem sie sich von der zweiten Struktur (120) entfernen und/oder sich in Richtung der ersten Struktur (110) erstrecken.

5. Einheit (1) nach einem der vorstehenden Ansprüche, **dadurch gekennzeichnet, dass** sie einen oder mehrere Sensoren des folgenden Typs umfasst: Temperatursensor des Wärmeträgerfluids (C1, C2), Temperatursensor des Phasenwechselmaterials (C3), Temperatursensor des Luftstroms (C4) am Eingang und/oder am Ausgang des Wärmetauschers (7), Temperatursensor des von der Einheit (1) klimatisierten Raums (C5), einen Sensor der relativen Luftfeuchtigkeit (C6), einen Kohlendioxidsensor (C7).

6. Einheit (1) nach einem der vorstehenden Ansprüche, **dadurch gekennzeichnet, dass** die Einheit (1) dazu konfiguriert ist, mit einer Klima- und/oder Heizanlage eine Schnittstelle zu bilden oder darin integriert zu sein.

7. Einheit (1) nach einem der vorstehenden Ansprüche, **dadurch gekennzeichnet, dass** sie eine elektronische Verwaltungseinheit (15) umfasst, die dazu konfiguriert ist, unter anderem die Zirkulation des Wärmeträgerfluids (F) in dem Kreislauf (3) und/oder die Zirkulation des Wärmeregulierungsfluids (A) zu steuern.

8. Heiz- und/oder Klimaanlage, die eine Heiz- und/oder Kühleinheit (1) nach einem der vorstehenden Ansprüche umfasst.

## Claims

1. A heating and/or cooling unit (1) for at least one thermal regulation fluid (A), said unit (1) comprising at least a loop (3) where a heat transfer fluid (F) circulates, wherein said loop (3) comprises:
- a phase-change material (5) configured to store energy;
- at least one heat exchanger (7) configured, on one hand, for said heat transfer fluid (F) to flow through it and, on the other hand, to cool or warm up said storage material (5);
**characterized in that** said heat exchanger (7) features an elongated shape and comprises a first structure (110), where a conduit (110a) for the heat transfer fluid (F) is arranged, with a second structure (120) around the first structure (110), wherein said first (110) and second (120) structures are configured so that there is a gap between said structures (110, 120) that define a housing for said phase-change material (5), wherein the unit (1) is configured to cool or warm up said thermal regulation fluid (A) thanks to the second structure (120) of said heat exchanger, wherein said thermal regulation fluid (A) is air, said heat exchanger (7) is located in a sheath (21), the gap between the internal surface of the sheath (21) and the second structure (120) of said heat exchanger (7) defines a conduit (110a) for the thermal regulation fluid (A), said unit comprising at least one means of circulation (13) of said thermal regulation fluid (A), said means of circulation (13) being configured to circulate said fluid along said heat exchanger (7).

2. A unit (1) according to the previous claim, **characterized in that** it comprises at least one pump to circulate the heat transfer fluid (F) through said loop (3).

3. A unit (1) according to any one of the previous claims, **characterized in that** the first structure (110) and/or the second structure (120) comprise fins (111, 121, 122).

4. A unit (1) according to the previous claim, **characterized in that** the fins (111) of the first structure (110) extend away toward the second structure (120) of said heat exchanger (7), and/or the fins (121, 122) of the second structure (120) extend away from the second structure (120) and/or extend toward the first structure (110).

5. A unit (1) according to any one of the previous claims, **characterized in that** it comprises at least one sensor of the following types: a temperature sensor for the heat transfer fluid (C1, C2), a temperature sensor for the phase-change material (C3), a temperature sensor for the air flow (C4) into and/or out of said heat exchanger (7), a temperature sensor for the room (C5) that is thermally conditioned by said unit (1), a relative moisture sensor (C6), a carbon dioxide sensor (C7).

6. A unit (1) according to any one of the previous claims, **characterized in that** said unit (1) is configured to interface with or integrate with an air-conditioning and/or heating installation.

7. A unit (1) according to any one of the previous claims, **characterized in that** it comprises a management electronic entity (15) configured to monitor, inter alia, the circulation of the heat transfer fluid (F) through said loop (3) and/or the circulation of the thermal regulation fluid (A).

8. A heating and/or air-conditioning installation comprising a heating and/or air-conditioning unit (1) according to any one of the previous claims.
